# EUROPÄISCHE PATENTSCHRIFT

(11) **EP 2 286 501 B1**
(45) Veröffentlichungstag und Bekanntmachung des Hinweises auf die Patenterteilung: **14.12.2011**
(21) Anmeldenummer: 09765728.2
(22) Anmeldetag: 27.05.2009
(51) Int. Cl.: H02K 7/00, B60K 6/405, B60K 6/48

(54) **ELEKTROMASCHINE MIT EINEM STATORTRÄGER FÜR EINEN HYBRIDANTRIEBSSTRANG**
ELECTRIC MACHINE COMPRISING A STATOR SUPPORT FOR A HYBRID DRIVE TRAIN
MOTEUR ÉLECTRIQUE COMPORTANT UN SUPPORT DE STATOR POUR UNE CHAÎNE CINÉMATIQUE HYBRIDE

(30) Priorität: 16.06.2008 DE 102008002443
(43) Veröffentlichungstag der Anmeldung: 23.02.2011
(73) Patentinhaber: ZF Friedrichshafen AG, 88038 Friedrichshafen (DE)
(72) Erfinder: HOFFMANN, Rayk, 88048 Friedrichshafen (DE); GNANDT, Thomas, 88263 Horgenzell (DE); LAMKE, Martin, 88213 Ravensburg (DE)
(86) Internationale Anmeldenummer: PCT/EP2009/056454
(87) Internationale Veröffentlichungsnummer: WO 2009/153148

(56) Entgegenhaltungen:
- EP-A- 1 067 003
- DE-A1- 10 043 736
- DE-A1- 10 102 015

## Beschreibung

Die vorliegende Erfindung betrifft einen Hybridantriebsstrang gemäß der im Oberbegriff des Patentanspruches 1 näher definierten Art.

Aus der Fahrzeugtechnik sind Fahrzeuge, insbesondere Nutzfahrzeuge mit einem Hybridantriebsstrang bekannt. Der Hybridantriebsstrang umfasst üblicherweise einen Verbrennungsmotor, der über eine Kupplung mit einem Getriebe gekoppelt ist. Als zusätzliche Antriebsquelle ist eine Elektromaschine vorgesehen, die zum Beispiel getriebeeingangsseitig angeordnet ist. Auf diese Weise kann das Fahrzeug über den Verbrennungsmotor und/oder über die Elektromaschine angetrieben werden. Die Elektromaschine kann sowohl als Motor oder auch als Generator betrieben werden. Als Getriebe ist hier ein automatisiertes Getriebe vorgesehen.

Bei den bekannten Hybridantriebssträngen wird die Elektromaschine in das Getriebegehäuse integriert. Dazu ist es erforderlich, dass zum Beispiel der Statorträger der Elektromaschine entsprechend aufwändig gestaltet ist, um in das Getriebegehäuse integriert zu werden. Zudem sind konstruktive Änderungen an dem Getriebegehäuse erforderlich, um eine Anpassung an den Statorträger und an die anderen Bauteile der Elektromaschine zu realisieren. Somit kann das üblicherweise verwendete Getriebegehäuse, welches bei Fahrzeugen ohne Elektromaschine eingesetzt wird, nicht verwendet werden. Eine solche Anordnung ist beispielhaft aus der DE 10 2005 040 770 A1 bekannt.

Schließlich ist aus der EP 1 067 003 A2 ein Hybridantriebsstrang eines Fahrzeuges bekannt, der einen Verbrennungsmotor, eine Elektromaschine mit einem Statorträger, ein Getriebegehäuse zum Aufnehmen eines Getriebes und ein Hybridgehäuse zum Aufnehmen der Elektromaschine sowie eine Kupplung umfasst.

Der vorliegenden Erfindung liegt die Aufgabe zu Grunde, einen Hybridantriebsstrang mit Elektromaschine der eingangs beschriebenen Gattung vorzuschlagen, welche konstruktiv möglichst einfach gestaltet ist und ein Integrieren der Elektromaschine in das Getriebegehäuse ohne konstruktive Änderungen ermöglicht.

Diese Aufgabe wird erfindungsgemäß durch die Merkmale des Patentanspruches 1 gelöst. Weitere vorteilhafte Ausgestaltungen ergeben sich aus den Unteransprüchen und den Zeichnungen.

Die der Erfindung zu Grunde liegende Aufgabe kann durch einen Hybridantriebsstrang mit einer Elektromaschine mit einem Statorträger, mit einem Getriebegehäuse zum Aufnehmen des Getriebes und einem Hybridgehäuse zum Aufnehmen der Elektromaschine und z. B. der Kupplung eines Fahrzeuges, insbesondere eines Nutzfahrzeuges, gelöst werden, wobei der Statorträger einteilig mit einer Befestigung zum Halten an dem Hybridgehäuse und dem Getriebegehäuse ausgebildet ist und an den Statorträger ein Flanschkragen oder dergleichen als Befestigung angeformt ist und der Flanschkragen des Statorträgers mehrere Aussparungen oder dergleichen aufweist, wodurch in vorteilhafter Weise das Gewicht des Statorträgers verringert wird, und durch eine geeignet angebrachte Aussparung eine Durchführung für den Ausrückstößel beziehungsweise die Druckstange der Kupplungsbetätigung bei nicht zentral angeordnetem Kupplungsteller realisiert wird. Es ist auch möglich, dass die Befestigung lösbar an dem Statorträger vorgesehen ist. Mit der als Flanschkragen ausgeführten Befestigung ist es auf einfachste Weise möglich, den Statoträger zwischen dem hybridgehäuse und dem Getriebegehäuse zu verklemmen, ohne dass konstruktive Änderungen an dem Getriebegehäuse vorgenommen werden müssen. Auf diese Weise wird ein konstruktiv besonders einfach ausgeführter Statorträger bei der Elektromaschine realisiert, der verschiedene erforderliche Anschlüsse und Schnittstellen in nur einem Bauteil vereint.

Auf diese Weise wird auch ein Hybridantriebsstrang mit einer adaptiv veränderten Elektromaschine vorgeschlagen, die an bereits vorhandenen Getriebegehäusen montiert werden kann, welche z. B. auch bei anderen Antriebssträngen eingesetzt werden.

Vorzugsweise kann der Flanschkragen oder dergleichen über den Umfang verteilt mehrere axiale Durchgangsbohrungen oder dergleichen aufweisen. Diese Durchgangsbohrungen dienen als Durchführung für die Verschraubungen, welche vorgesehen sind, um zum Beispiel das Hybridgehäuse an dem üblichen Getriebegehäuse zu befestigen. Dadurch wird in vorteilhafter Weise kein zusätzlicher Montageaufwand für den Statorträger an dem Getriebegehäuse generiert.

Gemäß einer möglichen Weiterbildung der Erfindung kann vorgesehen sein, dass die Form des Flanschkragens jeweils an die axialseitige Kontur des Getriebegehäuses und des Hybridgehäuses angepasst ist. Auf diese Weise realisiert der Statorträger die SAE-Anschlüsse beziehungsweise SAE Schnittstellen, die üblicherweise zum Beispiel an einem Kurbelgehäuse des Verbrennungsmotors zum Befestigen an dem Getriebegehäuse vorgesehen sind. Somit kann der Statorträger axial zwischen das Hybridgehäuse und das Getriebegehäuse eingesetzt werden, wobei sich jedoch nur die axiale Länge des Hybridantriebsstranges um die axiale Breite des Statorträgers vergrößert. Ansonsten kann die Montage des Getriebegehäuses beziehungsweise des Hybridgehäuses an dem normierten Kurbelgehäuse des Verbrennungsmotors ohne Änderungen erfolgen.

Eine nächste mögliche Ausgestaltung der Erfindung kann vorsehen, dass der Statorträger mit einer Transportsicherung verbindbar ist. Die Transportversicherung kann z.B. als tellerförmiges Bauteil ausgeführt sein, welches zum einen an dem Statorträger und zum anderen an dem Rotor der Elektromader Montage oder bei einem Austausch aufgrund der Anziehungskraft der Permanentmagneten der Elektromaschine mit dem Rotor in Berührung kommt. Es sind auch andere konstruktiv gestaltete Transportsicherungen einsetzbar. Nach dem Transport beziehungsweise während der Montage kann diese Transportsicherung auf einfachste Weise wieder von dem Statorträger entfernt werden.

In besonders vorteilhafter Weise kann der Statorträger der erfindungsgemäßen Elektromaschine als integrierter Kühlmantel oder dergleichen ausgebildet sein. Dazu kann beispielsweise der Statorträger zumindest einen integrierten Kühlkanal des Kühlsystems der Elektromaschine aufweisen. Vorzugsweise kann an zumindest einer Kernlagerstelle oder dergleichen des Statorträgers eine Entlüftung, beispielsweise in Form einer Entlüftungsschraube oder dergleichen, zum Entlüften des Kühlsystems der Elektromaschine vorgesehen sein. Die Kernlagerstelle ist eine beim Giessen des Statorträgers entstandene Ausnehmung. Somit ist der vorgeschlagene Statorträger so ausgeführt, dass er das Kühlsystem des Elektroantriebs entlüften kann.

Gemäß einer nächsten Weiterbildung der Erfindung kann vorgesehen sein, dass der Statorträger z. B. an seinem Umfangsbereich einen Kühlkanalanschluss und/oder ein Stromanschluss und/oder einen Temperatursensoranschluss aufweist. Somit wird die Funktionalität des Statorträgers erweitert und dadurch sonst zusätzlich erforderliche Bauteile eingespart. Auf diese Weise können sämtliche für den E-Antrieb erforderlichen Schnittstellen an dem Statorträger angeordnet werden. Vorzugsweise kann auch ein Rotorlagesensor in oder an dem Statorträger angeordnet werden.

Beispielsweise kann als Elektromaschine eine Innenläufermaschine vorgesehen werden. Es sind jedoch auch andere Bauweisen bei der Elektromaschine einsetzbar.

Nachfolgend wird die vorliegende Erfindung anhand der Zeichnungen näher erläutert.

Es zeigen:
Fig. 1 eine geschnittene Ansicht einer Elektromaschine mit einem Statorträger in einem Hybridantriebsstrang;
Fig. 2 eine dreidimensionale Einzelteilansicht des Statorträgers der Elektromaschine;
Fig. 3 eine dreidimensionale Ansicht der dem Getriebe zugewandten Seite der Elektromaschine;
Fig. 4 eine dreidimensionale Ansicht der dem Verbrennungsmotor zugewandten Seite der Elektromaschine;
Fig. 5 eine teilgeschnittene Ansicht der Elektromaschine; und
Fig. 6 eine dreidimensionale Teilansicht des Statorträgers mit einem Kühlmittelanschluss.

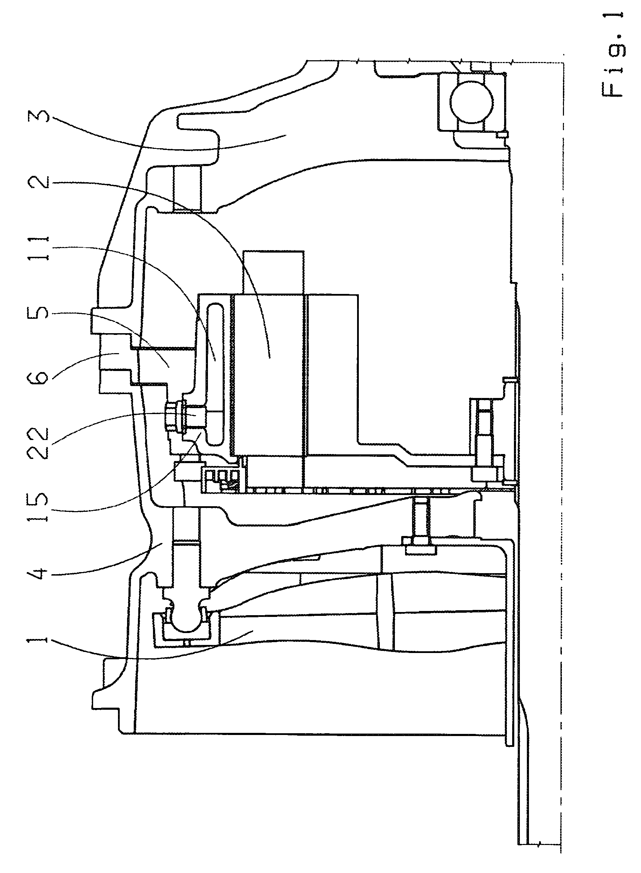

In Figur 1 ist exemplarisch ein Hybridantriebsstrang teilweise dargestellt, wobei in der Figurenbeschreibung auf die Bezeichnung von einigen an sich bekannten Bauteilen verzichtet wird.

Der Hybridantriebsstrang umfasst bekanntermaßen einen nicht weiter dargestellten Verbrennungsmotor, der über eine nur teilweise angedeutete Kupplung mit einem Getriebe gekoppelt ist, wobei die zum Betätigen der Kupplung vorgesehene Kupplungsgabel 1 gezeigt ist. Als Getriebe kann je nach Ausführung ein Handschaltgetriebe, ein automatisiertes Schaltgetriebe oder dergleichen eingesetzt werden. Das Getriebe ist in einem Getriebegehäuse 3 angeordnet. Die Elektromaschine 2 und die Kupplung sind in einem Hybridgehäuse 4 zwischen einem nicht weiter dargestellten Kurbelgehäuse des Verbrennungsmotors und dem Getriebegehäuse 3 angeordnet.

Die vorgeschlagene Elektromaschine 2 umfasst einen Statorträger 5, der einteilig mit einer Befestigung oder dergleichen zum Halten an dem Hybridgehäuse 4 und dem Getriebegehäuse 3 ausgebildet ist. Somit kann die erfindungsgemäß ausgebildete Elektromaschine 2 an das Getriebegehäuse 3 angepasst werden, so dass das übliche Getriebegehäuse 3, welches auch bei Antriebsträngen ohne Elektroantrieb verwendet wird, eingesetzt werden kann, ohne dass konstruktive Änderungen erforderlich sind.

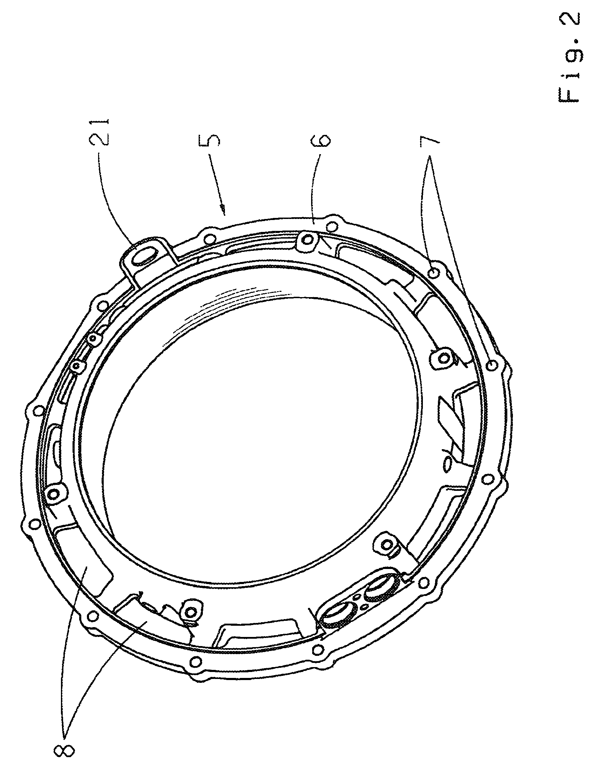

Die erfindungsgemäße Ausgestaltung des Statorträgers 5 ist insbesondere aus den Figuren 2, 3 und 4 ersichtlich. Als Befestigung ist ein radial außen liegender Flanschkragen 6 an den Statorträger 5 angeformt. Der Flanschkragen 6 weist mehrere über den Umfang verteilt axial ausgerichtete Durchgangsbohrungen 7 auf. Die Durchgangsbohrungen 7 nehmen nicht weiter dargestellte Verschraubungen auf, um den Statorträger 5 zwischen dem Hybridgehäuse 4 und dem Getriebegehäuse 3 zu befestigen.

Die Form des Flanschkragens 6 ist jeweils an die axial zugewandte Kontur des Getriebegehäuses 3 und des Hybridgehäuses 4 angepasst. Auf diese Weise kann der Statorträger 5 axial zwischen dem Getriebegehäuse 3 und dem Hybridgehäuse 4 verklemmt werden, wie dies insbesondere aus Figur 1 ersichtlich ist.

Durch die erfindungsgemäße Gestaltung des Statorträgers der Elektromaschine 2 entsteht kein zusätzlicher Aufwand für die Montage, da der Statorträger 5 lediglich axial zwischen dem Hybridgehäuse 4 und dem Getriebegehäuse 4 angeordnet wird, ohne dass eine Änderung der konstruktiven Form erforderlich ist, wobei nur die axiale Länge des Hybridantriebsstranges vergrößert wird.

Der Flanschkragen 6 des Statorträgers 5 weist mehrere Aussparungen 8 auf, welche insbesondere aus den Figuren 2, 3 und 4 ersichtlich sind. Durch die vorhandenen Aussparungen 8 kann zum einen das Gewicht des Statorträgers 5 verringert werden und zum anderen kann durch eine geeignet angebrachte Aussparung 8 ein Durchführen eines Ausrückstößels der Kupplung realisiert werden. Ferner ist an dem Statorträger 5 eine Befestigungslasche 20 vorgesehen. An der Befestigungslasche 20 können zusätzliche Bauteile auf einfachste Weise gehalten werden.

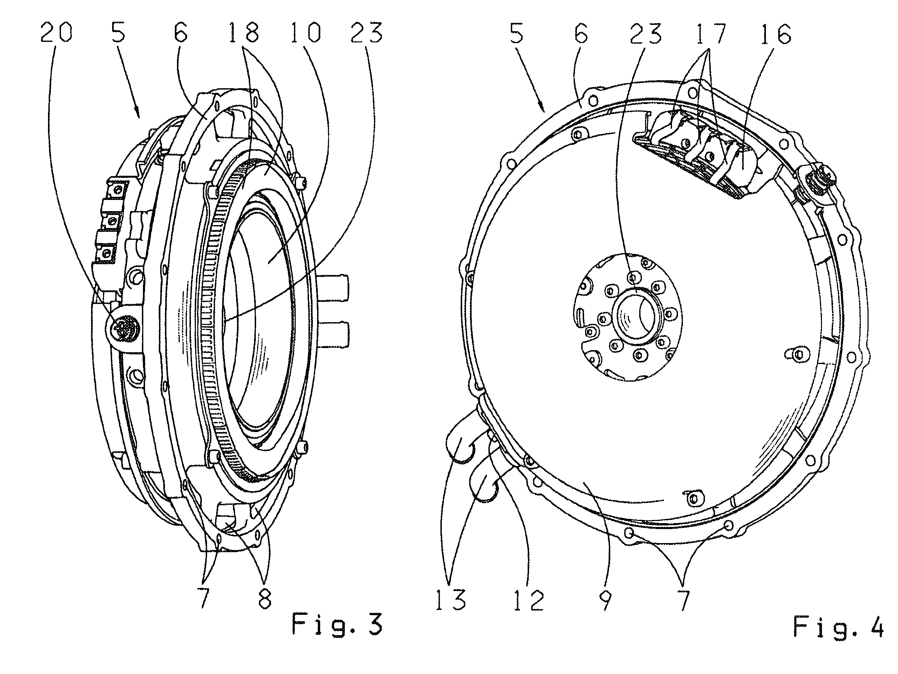

Wie insbesondere aus Figur 4 ersichtlich ist, kann der Statorträger 5 mit einer Transportsicherung verbunden werden. Diese Transportsicherung ist als mit dem Statorträger 5 über Schrauben befestigtes Blech 9 ausgebildet. Die Transportsicherung dient dazu, dass der Statorträger 5 während des Transportes und während der Montage an seiner korrekten Position gehalten wird, ohne dass der Statorträger 5 mit einem Rotor 10 der Elektromaschine 2 in Berührung kommt. Der Rotor 10 der Elektromaschine 2 ist an der Rotornabe 23 befestigt.

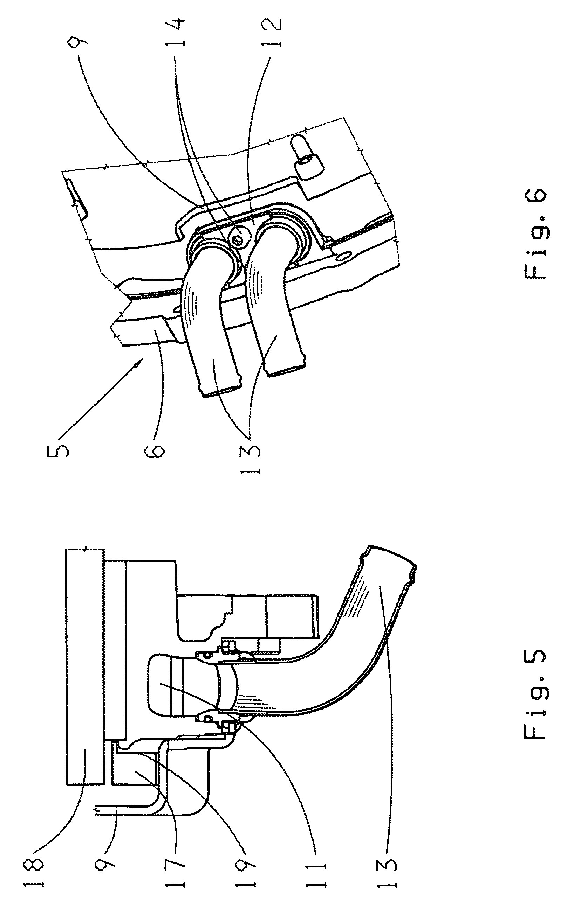

Aus Figur 5 ist ersichtlich, dass der Statorträger 5 der Elektromaschine 2 zumindest einen integrierten Kühlkanal 11 eines Kühlsystems der Elektromaschine 2 aufweist. Der Kühlkanal 11 verläuft im Inneren des z.B. als Gussteil ausgebildeten Statorträgers 5. Wie insbesondere aus den Figuren 5 und 6 ersichtlich ist, weist der Statorträger 5 einen Kühlanschluss für die in dem Statorträger 5 vorgesehenen Kühlkanäle 11 auf. Der Kühlmittelanschluss ist mit einer Haltebrille 12 an dem Statorträger 5 befestigt. Auf diese Weise sind die Anschlussstutzen 13 mit den Kühlkanälen 11 zur Kühlmittelversorgung verbunden. Als Kühlmittel kann z. B. Wasser verwendet werden.

Aus Figur 6 wird verdeutlicht, dass die Haltebrille 13 zum Befestigen des Kühlmittelanschlusses durch zwei Befestigungsschrauben 14 vorgespannt wird. Wenn die Befestigungsschrauben 14 gelöst werden, ist es möglich, dass die Anschlussstutzen 13 in eine gewünschte Position verdreht werden. Auf diese Weise können die Anschlussstutzen 13 anvorgegebene bereits verlegte Leitungen angepasst werden.

Zum Entlüften des Kühlsystems kann vorzugsweise eine Kernlagerstelle 15 des Statorträgers 5 verwendet werden. Dazu kann eine Entlüftungsschraube 22 eine Öffnung der Kernlagerstelle 15 verschließen. Durch entsprechendes Herausschrauben der Entlüftungsschraube 22 kann das Kühlsystem entlüftet werden. Die Entlüftungsschraube 22 ist insbesondere aus Figur 1 ersichtlich.

An dem Statorträger 5 ist zudem auch ein Stromanschlusskasten 16 befestigt. In den Stromanschlusskasten 16 werden die drei elektrischen Leiter 17 geführt, die mit den jeweiligen Spulen 18 zwischen dem Rotor 10 und dem Statorträger 5 der Elektromaschine 2 verbunden sind, welches insbesondere aus Figur 4 hervorgeht. In Figur 5 ist u. a. eine Stromschiene 19 dargestellt, in der die Leiter 17 geführt sind, wobei die Stromschiene 19 an der Außenseite des Statorträgers 5 entlang geführt wird.

Des Weiteren ist an dem Statorträger 5 ein Temperartursensoranschluss 20, z. B. ein so genannter NTC-Stecker vorgesehen. Der Temperartursensoranschluss 20 ist am Außenumfang des Statorträgers 5 angeordnet.

Somit wird eine Elektromaschine 2 mit einem kompakt und einteilig aufgebauten Statorträger 5 realisiert, an dem sämtliche für den Betrieb erforderlichen Anschlüsse und Schnittstellen vereint sind.

### Bezugszeichen

- 1: Kupplungsgabel
- 2: Elektromaschine
- 3: Getriebegehäuse
- 4: Hybridgehäuse
- 5: Statorträger
- 6: Flanschkragen
- 7: Durchgangsbohrung
- 8: Aussparung
- 9: Blech
- 10: Rotor
- 11: Kühlkanal
- 12: Haltebrille
- 13: Anschlussstutzen
- 14: Befestigungsschrauben
- 15: Kernlagerstelle
- 16: Stromanschlusskasten
- 17: Leiter
- 18: Spulen
- 19: Stromschiene
- 20: Temperartursensoranschluss
- 21: Befestigungslasche
- 22: Entlüftungsschraube
- 23: Rotornabe

## Patentansprüche

1. Hybridantriebsstrang umfassend einen Verbrennungsmotor, eine Elektromaschine (2) mit einem Statorträger (5), ein Getriebegehäuse (3) zum Aufnehmen des Getriebes und ein Hybridgehäuse (4) zum Aufnehmen der Elektromaschine (2) eines Fahrzeuges, sowie eine zwischen dem Verbrennungsmotor und der Elektromaschine (2) angeordnete Kupplung, insbesondere eines Nutzfahrzeuges, **dadurch gekennzeichnet, dass** der Statorträger (5) einteilig mit einer Befestigung zum Halten an dem Hybridgehäuse (4) und dem Getriebegehäuse (3) ausgebildet ist, dass an den Statorträger (5) als Befestigung ein radial außenliegender Flanschkragen (6) angeformt ist, dass der Flanschkragen (6) mehrere Aussparungen (8) aufweist, und dass ein Ausrückstößel oder eine Druckstange der Kupplungsbetätigung durch eine der Aussparungen (8) hindurchgeführt ist.

2. Hybridantriebsstrang nach Anspruch 1, dadurch **gekennzeichn** e t, dass der Flanschkragen (6) über den Umfang verteilt mehrere axiale Durchgangsbohrungen (7) aufweist.

3. Hybridantriebsstrang nach Anspruch 1 oder 2, **dadurch gekennzeichnet, dass** die Form des Flanschkragens (6) jeweils an die axialseitige Kontur des Getriebegehäuses (3) und des Hybridgehäuses (4) angepasst ist.

4. Hybridantriebsstrang nach Anspruch 3, dadurch **gekennzeichn et**, dass der Statorträger (5) axial zwischen dem Getriebegehäuse (3) und dem Hybridgehäuse (4) verklemmt ist.

5. Hybridantriebsstrang nach einem der vorangehenden Ansprüche, **dadurch gekennzeichnet, dass** der Statorträger (5) mit einer Transportsicherung verbindbar ist.

6. Hybridantriebsstrang nach einem der vorangehenden Ansprüche, **dadurch gekennzeichnet, dass** der Statorträger (5) zumindest einen integrierten Kühlkanal (11) eines Kühlsystems der Elektromaschine (2) aufweist.

7. Hybridantriebsstrang nach Anspruch 6, dadurch **gekennzeichn et**, dass zumindest eine Kernlagerstelle (15) des Statorträgers (5) mit einer Entlüftung zum Entlüften des Kühlsystems versehen ist.

8. Hybridantriebsstrang nach einem der vorangehenden Ansprüche, **dadurch gekennzeichnet, dass** der Statorträger (5) an seinem Umfangsbereich einen Kühlkanalanschluss und/oder einen Stromanschluss und/oder Temperatursensoranschluss (20) aufweist.

9. Hybridantriebsstrang nach einem der vorangehenden Ansprüche, **dadurch gekennzeichnet, dass** der Statorträger (5) einen Rotorlagesensor aufweist.

## Claims

1. Hybrid drive train comprising an internal combustion engine, an electrical machine (2) having a stator support (5), a transmission housing (3) for accommodating the transmission, and a hybrid housing (4) for accommodating the electrical machine (2) of a vehicle, and also comprising a coupling which is arranged between the internal combustion engine and the electrical machine (2), in particular of a utility vehicle, **characterized in that** the stator support (5) is formed in one piece with an attachment means in order to be retained on the hybrid housing (4) and the transmission housing (3), **in that** a radially outer flange collar (6) is integrally formed on the stator support (5) as an attachment means, **in that** the flange collar (6) has a plurality of cutouts (8), and **in that** a disengagement tappet or a push rod of the coupling operating means is routed through one of the cutouts (8) .

2. Hybrid drive train according to Claim 1, **characterized in that** the flange collar (6) has a plurality of axial passage holes (7) distributed over the circumference.

3. Hybrid drive train according to Claim 1 or 2, **characterized in that** the shape of the flange collar (6) is matched in each case to the axial contour of the transmission housing (3) and of the hybrid housing (4).

4. Hybrid drive train according to Claim 3, **characterized in that** the stator support (5) is clamped axially between the transmission housing (3) and the hybrid housing (4).

5. Hybrid drive train according to one of the preceding claims, **characterized in that** the stator support (5) can be connected to a transportation securing means.

6. Hybrid drive train according to one of the preceding claims, **characterized in that** the stator support (5) has at least one integrated cooling duct (11) of a cooling system of the electrical machine (2).

7. Hybrid drive train according to Claim 6, **characterized in that** at least one core storage point (15) of the stator support (5) is provided with a venting means for venting the cooling system.

8. Hybrid drive train according to one of the preceding claims, **characterized in that** the stator support (5) has, in its circumferential region, a cooling duct connection and/or an electrical connection and/or a temperature sensor connection (20).

9. Hybrid drive train according to one of the preceding claims, **characterized in that** the stator support (5) has a rotor position sensor.

## Revendications

1. Chaîne cinématique hybride comprenant un moteur à combustion interne, une machine électrique (2) avec un support de stator (5), un boîtier de transmission (3) pour recevoir la transmission et un boîtier hybride (4) pour recevoir la machine électrique (2) d'un véhicule, ainsi qu'un embrayage disposé entre le moteur à combustion interne et la machine électrique (2), notamment d'un véhicule utilitaire, **caractérisée en ce que** le support de stator (5) est réalisé d'une seule pièce avec une fixation pour le retenir sur le boîtier hybride (4) et le boîtier de transmission (3), **en ce qu'**un collet de bride (6) situé radialement à l'extérieur est façonné sur le support de stator (5) en tant que fixation, **en ce que** le collet de bride (6) présente plusieurs évidements (8) et **en ce qu'**un poussoir de débrayage ou une tige de pression de l'actionnement d'embrayage est guidé(e) à travers l'un des évidements (8).

2. Chaîne cinématique hybride selon la revendication 1, **caractérisée en ce que** le collet de bride (6) présente plusieurs alésages traversants axiaux (7) répartis sur la périphérie.

3. Chaîne cinématique hybride selon la revendication 1 ou 2, **caractérisée en ce que** la forme du collet de bride (6) est à chaque fois adaptée au contour latéral axial du boîtier de transmission (3) et du boîtier hybride (4).

4. Chaîne cinématique hybride selon la revendication 3, **caractérisée en ce que** le support de stator (5) est serré axialement entre le boîtier de transmission (3) et le boîtier hybride (4).

5. Chaîne cinématique hybride selon l'une quelconque des revendications précédentes, **caractérisée en ce que** le support de stator (5) peut être connecté à une fixation pour le transport.

6. Chaîne cinématique hybride selon l'une quelconque des revendications précédentes, **caractérisée en ce que** le support de stator (5) présente au moins un canal de refroidissement intégré (11) d'un système de refroidissement de la machine électrique (2).

7. Chaîne cinématique hybride selon la revendication 6, **caractérisée en ce qu'**au moins un point support de noyau (15) du support de stator (5) est pourvu d'un évent pour l'aération du système de refroidissement.

8. Chaîne cinématique hybride selon l'une quelconque des revendications précédentes, **caractérisée en ce que** le support de stator (5) présente sur sa région de périphérie un raccord de canal de refroidissement et/ou un raccord de courant et/ou un raccord de capteur de température (20).

9. Chaîne cinématique hybride selon l'une quelconque des revendications précédentes, **caractérisée en ce que** le support de stator (5) présente un capteur de position du rotor.
